# EUROPÄISCHE PATENTANMELDUNG

(11) **EP 0 530 567 A1**
(43) Veröffentlichungstag der Anmeldung: **10.03.1993**
(21) Anmeldenummer: 92113876.4
(22) Anmeldetag: 14.08.1992
(51) Int. Cl.: C01B 33/037, B01J 10/00

(54) **Verfahren zur Herstellung von Silicium sowie Vorrichtung zu dessen Durchführung**

(30) Priorität: 27.08.1991 DE 4128325
(71) Anmelder: BAYER AG, 51368 Leverkusen (DE)
(72) Erfinder: Wambach, Karsten, Dr., W-4030 Ratingen 5 (DE); Schwirtlich, Ingo, Dr., W-4150 Krefeld 1 (DE)

(57) **Zusammenfassung**

Kontinuierliches Verfahren zur Herstellung von gereinigtem Silicium durch Behandlung des zu reinigenden Siliciums mit reaktiven Gasen oder reaktiven Gasgemischen, wobei das zu reinigende Silicium durch einen mehrstufigen Reaktor aus siliciumresistentem Material geführt wird. Reaktor zur Durchführung des Verfahrens, der aus einem senkrecht stehenden Rohr mit gas- und silicium- durchlässigen Böden in der Art einer Begasungssäule besteht.

## Beschreibung

Die vorliegende Erfindung betrifft ein kontinuierliches Verfahren zur Herstellung von gereinigtem Silicium durch Behandlung des zu reinigenden Siliciums mit reaktiven Gasen oder reaktiven Gasgemischen sowie eine Vorrichtung zur Durchführung des Verfahrens.

Für die Verwendung in der Solartechnik ist Silicium hoher Reinheit erforderlich, das bisher über die Verfahren der Halbleitertechnik erzeugt wurde. Die Verfahren arbeiten im wesentlichen über die Gasphasenabscheidung von Silicium aus flüchtigen, destillativ zu reinigenden Verbindungen. In neuerer Zeit wurden eine Reihe von Verfahren entwickelt, die, miteinander kombiniert eingesetzt, die Herstellung von Silicium mit für die Solartechnik ausreichend niedrigen Verunreinigungsgehalten aus metallurgischem Silicium, Silicium aus der Reduktion von Siliciumtetrachlorid mit Aluminium oder aus der Reduktion von reinem Quarzsand mit Aluminium oder reinem Kohlenstoff erlauben.

Wirksame Verfahren zur Abreicherung von Verunreinigungen der nach den oben genannten Verfahren erhaltenen Rohprodukten, sind dabei die Behandlung von Silicium mit Säuren, besonders zur Entfernung metallischer Verunreinigungen, oder die gerichtete Erstarrung aus der Schmelze unter Ausnutzung der Segregation der Verunreinigungselemente.

Die Begasung von flüssigem Silicium mit reaktiven Gasen wie Sauerstoff, Wasserdampf, Chlor und Chlorverbindungen oder Wasserstoffplasma zur Entfernung von Bor, Kohlenstoff, Phosphor und Metallen wird vielfach in Kombination mit Schlackenextraktionsverfahren eingesetzt.

Die Abreicherung flüchtiger Verbindungen, insbesondere von Phosphor, gelingt durch eine Vakuumentgasung kombiniert mit einer Schlacken- und Säurebehandlung. Der Phosphorgehalt liegt danach um 1 ppmg und kleiner (z.B. EP-A 24 614).

Die verschiedenen Begasungsverfahren erlauben vor allem auch die Abreicherung von Bor, welches in den genannten Rohsiliciumsorten in Konzentrationen bis um 50 ppmg vorliegt. Die bei der Behandlung entstehenden, nichtflüchtigen Borverbindungen löst man dabei üblicherweise in einer Extraktionsschlacke, die sich von der Siliciumschmelze abtrennen läßt. Dabei wird Bor auf unter 1 ppmg abgereichert (DE-A 2 623 413).

Die Abreicherung von Bor ist jedoch auch durch Begasungen ohne Zufügen von Extraktionsschlacken möglich. So ist beispielsweise aus der DE-A 2 623 413 die Wirkung einer Behandlung von Siliciumschmelzen mit Wasserstoff-Wasserdampfgemischen, die den Vorteil einer einfachen Gasaufbereitung erlauben, ohne saure oder giftige Gaskomponenten abtrennen zu müssen, auf die Borabreicherungen bekannt.

Auch in der US A 3 008 887 wird über die Raffination von Silicium mit Wasserstoff-Wasserdampf-Gemischen zur Borabreicherung berichtet, die aber wegen der starken Oxidation von Silicium zu Siliciumdioxid und Bor zu Boroxid zugunsten einer technisch jedoch aufwendigeren Behandlung mit atomarem Wasserstoff bei reduziertem Druck aufgegeben wurde.

Nachteilig bei allen Verfahren, die eine Schlackenbehandlung beinhalten, ist, daß die Siliciumschmelze durch die Schlackenkomponenten oder die Fremdelementgehalte in den Schlacken verunreinigt wird. Aus diesem Grunde müssen sehr reine Schlackenkomponenten eingesetzt werden, was teilweise eine vorherige Raffination der Schlackenstoffe voraussetzt. Weiterhin bereitet die quantitative Abtrennung der Schlacke von der Siliciumschmelze häufig Schwierigkeiten. Die eingesetzten Schlackenmengen betragen üblicherweise einige zehn Prozent der Gesamtcharge aus Silicium und Schlacke, wodurch sich das Problem der Schlackenwiederaufarbeitung und -beseitigung ergibt.

Alle bisher genannten Begasungsverfahren arbeiten diskontinuierlich in Schmelztiegeln. In der DE-A 3 727 646 wird jedoch ein Verfahren beschrieben, bei dem durch das kontinuierliche Aufschmelzen und gleichzeitigem Begasen in einem schräggestellten Rohr eine Abtrennung von oxidischen Schlacken und Verunreinigungen durchgeführt wird. Bei diesem Verfahren kann jeweils nur ein dünner Siliciumfilm behandelt werden, wobei die Schlacke von Zeit zu Zeit mechanisch aus der Schmelzzone entfernt werden muß.

In der US-A 4 242 175 wird Silicium kontinuierlich aufgeschmolzen und strömt dann als dünner Flüssigkeitsfilm durch ein innen gewelltes Rohr, wobei es mit atomarem Wasserstoff begast wird. Auch hier besteht der Nachteil eines nur dünnen Schmelzefilms im Kontakt mit dem Gas, ohne daß die Verweilzeit regelbar ist. Die Verwendung von atomarem Wasserstoff setzt außerdem das Anlegen eines Unterdruckes voraus, was Verdampfungsverluste des Siliciums fördert.

Aufgabe dieser Erfindung ist die Bereitstellung eines Verfahrens, welches die beschriebenen Nachteile der Verfahren des Standes der Technik nicht aufweist. Es wurde nur ein Verfahren gefunden, welches die Anforderungen hervorragend erfüllt.

Gegenstand dieser Erfindung ist ein kontinuierliches Verfahren zur Herstellung von gereinigtem Silicium durch Behandlung des zu reinigenden Siliciums mit reaktiven Gasen oder reaktiven Gasgemischen, wobei das zu reinigende Silicium durch einen mehrstufigen Reaktor aus siliciumresistentem Material geführt wird.

In einer bevorzugten Ausführungsform des erfindungsgemäßen Verfahrens beträgt die Zahl der Stufen im Reaktor mindestens 3, besonders bevorzugt zwischen 7 und 15.

Das erfindungsgemäße Verfahren erlaubt auf einfache Weise insbesondere die Abreicherung von Bor bis auf niedrigste Gehalte an der chemisch analytischen Nachweisgrenze in einer schlackenfreien Umgebung bei Siliciumausbeuten von über 95 %. Die Schwierigkeiten der Schlackenextraktionsverfahren werden damit vermieden.

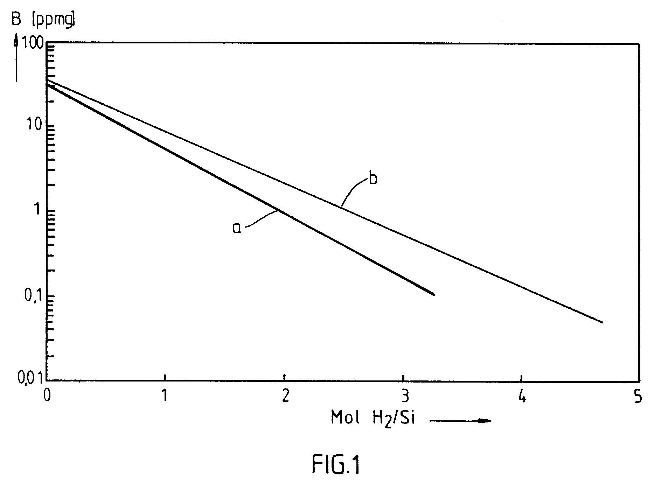

Ein weiterer Vorteil des Verfahrens besteht in der kontinuierlichen Begasung von Silicium bei höherem Füllgrad als beispielsweise in den DE-A 3 737 646 und US-A 4 242 175 beschriebenen Verfahren. Wie die Figur 1 zeigt, beinhaltet das erfindungsgemäße Verfahren eine deutliche Einsparung im Gasverbrauch gegenüber Tiegelbegasungen bei gleicher Verweilzeit und hohen Abreicherungen von Bor in einem Raffinationsschritt. In Figur 1 ist der Borgehalt in ppmg auf der Ordinate gegen das Molverhältnis H₂/Si auf der Abzisse angegeben. Hierbei wird die Kaskadenbegasung (a) mit der Tiegelbegasung (b) verglichen.

Jedoch können besonders gute Ergebnisse erzielt werden, wenn als reaktives Gasgemisch Mischungen aus Wasserstoff und Wasserdampf eingesetzt werden. Diese können mit großem Erfolg zur feststoff- und schlackenfreien Abreicherung von Bor bis zu sehr niedrigen Gehalten von weniger als 0,1 ppmg verwendet werden. Obwohl die Bildung von festen oder flüssigen Oxiden durch die Reaktion des Siliciums und metallischer Verunreinigungen im Silicium mit dem Sauerstoff des Wassers zu erwarten waren, konnten bis zu einem Gehalt von 3,5 % Volumen an Wasserdampf keine Abscheidungen von Feststoffen oder Anreicherungen von Schlacken in den einzelnen Kaskaden des Reaktors festgestellt werden.

Beim erfindungsgemäßen Verfahren beträgt also der Wasseranteil im Wasserstoff bevorzugt zwischen 0,2 und 3,5 Vol.-%.

Um eine Abreicherung von Bor bis auf unter 1 ppmg zu erhalten, muß bei der Begasung ein Molverhältnis von Wasserstoff zu Silicium von mehr als 0,5, bevorzugt mindestens 1, eingestellt werden. Besonders gute Ergebnisse wurden mit Molverhältnissen zwischen 0,7 und 3 erzielt (Fig. 1), wobei das Molverhältnis von Wasserstoff zu Silicium dazu über die Silicium- und Gasmengenströme und die Verweilzeit des Siliciums im Reaktor eingestellt werden. Besonders vorteilhaft kann es weiterhin sein, wenn die Begasung des Siliciums im Gegenstrom erfolgt.

Zur näheren Erläuterung des erfindungsgemäßen Verfahrens soll zunächst der prinzipielle Aufbau eines geeigneten kaskadierten Reaktors beschrieben werden. Der Reaktor besteht aus mehreren Teileinheiten aus siliciumresistenten Materialien, wie Quarz, Glaskohlenstoff, Graphit, Siliciumcarbid oder -nitrit oder deren Kombinationen, in denen ständig flüssiges Silicium, welches in einem separaten Teil aufgeschmolzen und flüssig eindosiert oder auch fest zugeführt werden kann, von einer Teileinheit in die nächste strömt. Der Siliciumeinlaß der zweiten Teileinheit ist damit gleichzeitig der Auslaß zur ersten, der Einlaß der dritten ist der Auslaß der zweiten Einheit usw. Das reaktive Gas oder Gasgemisch strömt dabei gleichzeitig von der letzten Teileinheit über die vorletzte usw. bis durch die erste. In jeder Teileinheit wird das Gas oder Gasgemisch dabei durch oder über oder gleichzeitig durch und über das schmelzflüssige Silicium geleitet. Das Abgas wird nach dem Durchströmen aller Teileinheiten abgetrennt und einer Aufarbeitung zugeführt. Es kann nach der Aufarbeitung prinzipiell wieder in den Prozeß zurückgeführt werden.

Die Anordnung der Behälter zueinander, ob neben- oder übereinander, spielt grundsätzlich für das erfindungsgemäße Verfahren keine Rolle. Die Zahl der Teileinheiten beträgt vorteilhaft mindestens 3 bis 15 solcher Kaskaden. Höhere Anzahlen tragen nicht mehr nennenswert zur Abreicherung von Verunreinigungen bei. Das Zuführen von verschiedenen Gasen in den jeweiligen Kaskaden ist ebenfalls möglich. So sind Ausführungen denkbar, bei denen am Siliciumeintrag zusätzlich zum durchströmenden reaktiven Gasgemisch ein Inertgas beigemischt wird oder in zwei benachbarten Kaskaden mit verschiedenen reaktiven Gasgemischen begast wird. Eine Durchführung der Begasung bei Unterdruck kann vorteilhaft sein.

Zur Durchführung des erfindungsgemäßen Verfahrens sind die gängigen Vorrichtungen zur Begasung von Flüssigkeiten geeignet, solange sie in siliciumresistenter Ausführung konstruiert sind.

Gegenstand dieser Erfindung ist auch eine Vorrichtung zur Durchführung des erfindungsgemäßen Verfahrens. Bevorzugt handelt es sich dabei um ein senkrecht stehendes Rohr mit gas- und siliciumdurchlässigen Böden in der Art einer Begasungssäule.

Als Konstruktionsstoffe kommen dabei bevorzugt Quarz, Graphit, SiC, Si₃N₄ und/oder Kombinationen dieser Materialien infrage.

Eine besonders einfache Ausführungsform der erfindungsgemäßen Vorrichtung besteht darin, daß sie in Art einer Begasungssäule mit horizontal eingebauten silicium- und gasdurchlässigen Böden konstruiert ist, wobei die Böden übereinandergesetzt werden können.

Das Silicium kann als Feststoffpulver oder Granulat mit handelsüblichen Dosiereinrichtungen ständig in einen Schmelzteil gegeben werden, aus dem es nach dem Aufschmelzen kontinuierlich in die Begasungssäule läuft. Unter gleichzeitiger Gegenstrombegasung baut sich auf den einzelnen Böden eine bestimmte Schmelzhöhe an Silicium auf, welches vom reaktiven Gas oder Gasgemisch durch- und überströmt wird.

Am untersten Boden, der vorteilhaft trichterförmig ausgebildet ist, tropft das Silicium schließlich ab und kann dort je nach Fallhöhe und Wärmefluß als Granulat oder als Schmelze aufgefangen werden. Die Schmelze kann dabei direkt einer gerichteten Erstarrung unterzogen werden, die eine weitere Abreicherung von Verunreinigungen erlaubt. Der entstandene Gußblock kann dann zu Siliciumwafern für die Solarzellenherstellung aufgesägt werden. Das Granulat eignet sich beispielsweise als Ausgangsmaterial für eine Behandlung mit Säuren zur weiteren Reinigung. Die gerichtete Erstarrung oder Granulation bedeuten dabei keine Einschränkung des Verfahrens, das aus dem Reaktor abtropfende Silicium kann ohne weiteres jeder weiteren Anwendung zugeführt werden.

Die reaktionstechnische Auslegung der silicium- und gasdurchlässigen Böden und der entspechenden Reaktoren und die Weiterentwicklung des Verfahrens, insbesondere die Modifizierung der Böden sind ebenfalls Gegenstand der Erfindung. Das schmelzflüssige Silicium weist in dem Reaktor eine mittlere Verweilzeit auf, die sich durch den Reaktoraufbau, die Dosiergeschwindigkeit und mit Gasart und Gasdurchsatz in Grenzen einstellen läßt. Die auf diese Weise mögliche Regelung der Verweilzeit des Siliciums erlaubt dabei die Einstellung von bestimmten Verunreinigungsgehalten im Silicium, wie am Beispiel von Bor gezeigt.

Ein weiterer Vorteil des erfindungsgemäßen Verfahrens liegt in dem gegenüber Tiegelbegasungsverfahren deutlich geringeren Gasverbrauch oder bei gleichem Gasdurchsatz geringeren Zeitbedarf für die Abreicherung auf einen bestimmten Verunreinigungswert (Fig. 1). Darüberhinaus gelingt damit eine einfache und reproduzierbare Borabreicherung von Ausgangsgehalten um 50 ppmg Bor bis unter 0,1 ppmg, die mit anderen Verfahren nur schwierig und mit hohem Aufwand zu erzielen ist. Desweiteren können außerdem unedlere Elemente als Si wie z.B. Al, Ca oder Mg und auch Kohlenstoff abgereichert werden.

Wichtig für eine gleichbleibende Produktqualität des Siliciums ist eine stationäre Betriebsweise des Verfahrens. Beim Anfahren, Gaswechseln oder Abfahren treten Vorläufe oder Nachläufe an flüssigem Silicium mit schlechteren Abreicherungen der Verunreinigungen im Silicium auf. Diese Teilmengen können durch das Bereitstellen von separaten Auffangbehältern über eine Behälterwechselvorrichtung abgetrennt werden. Eine Probennahme am Ablauf des Reaktors erlaubt dabei eine Produktkontrolle während des laufenden Betriebes.

Eine Voraussetzung für die erfolgreiche Durchführung des Verfahrens ist, daß keine festen Reaktionsprodukte oder Schlacken innerhalb der Reaktionskaskaden zurückbleiben, die sich anreichern oder zur Verstopfung des Reaktors durch Sedimentation führen können.

Im folgenden wird die Erfindung beispielhaft erläutert, ohne daß hierin eine Einschränkung zu sehen ist.

### Beispiele 1 - 4

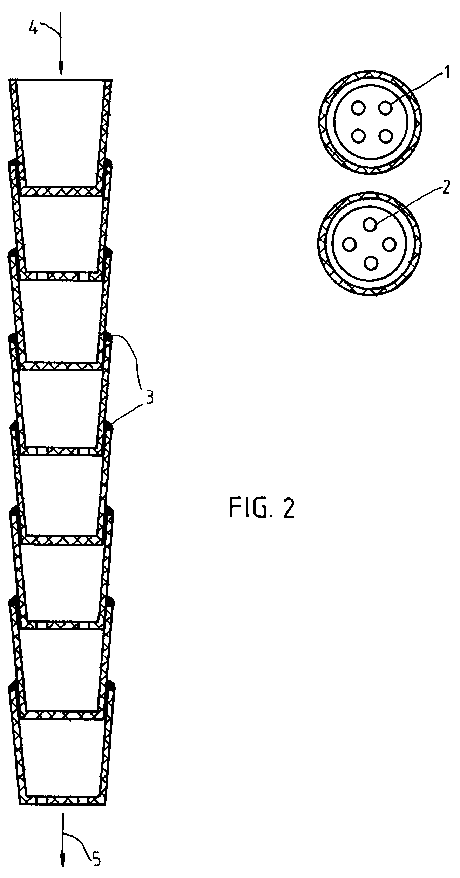

Mehrere Tiegel aus siliciumresistenten Materialien (Fig. 2) wie Graphit, Glaskohlenstoff, Quarz oder Siliciumnitrid wurden am Boden mehrfach durchbohrt (1 und 2) und dann zu einer Begasungskaskade in Form einer Lochbodenkolonne aufeinandergesetzt. Die Graphitteile wurden mit einem geeigneten Hochtemperaturkleber verbunden und die Verbindungsstellen bei erhöhter Temperatur unter Inertgas ausgehärtet. Die einzelnen Quarztiegel wurden untereinander verschmolzen und die Siliciumnitridteile ebenfalls miteinander verklebt (3). Die so aufgebaute Kaskade wurde im Falle des Graphits in ein Schutzrohr aus Quarz eingesetzt und im Quarz verklebt. Die Quarz- und Nitridtoile wurden ohne Schutzrohre verwendet. Die so aufgebauten Kolonnen wurden in einem geeigneten Ofen auf Temperaturen oberhalb der Schmelztemperatur des Siliciums aufgeheizt und dabei gleichzeitig mit einem Inertgas von unten nach oben gespült. Der oberste Tiegel diente als Schmelzbehälter für Silicium. In ihn wurde ständig über eine Förderschnecke Silicium als Granulat eindosiert und kontinuierlich aufgeschmolzen (4). Das so geschmolzene Silicium verteilte sich gegen den Gasstrom über alle Böden der Kaskade und trat schließlich am untersten Boden aus (5). Über eine geeignete Fallstrecke wurde das Silicium direkt als Granulat in einem geeigneten Behälter unter Inertgas aufgefangen. Nach der anfänglichen Inertbegasung wurde auf eine Begasung mit Wasserstoff-Wassergemischen bei einem Wassergehalt von 1 % umgestellt. Nach einer Betriebszeit von acht Stunden, in der ständig Silicium einchargiert, geschmolzen, begast und aufgefangen wurde, wurden die Apparaturen rasch abgekühlt und die einzelnen Böden auf die Siliciumverteilung und Schlackenbildung untersucht. Die einzelnen Böden erwiesen sich als komplett frei von Schlacken und Sedimenten. Es wurde lediglich metallisch glänzendes Silicium vorgefunden. Im Bereich der Aufschmelzzone waren oxidische Rückstände in geringer Menge zu bemerken, deren Anteile jedoch durch eine geeignete Auslegung der Schmelzzone zu verringern waren. Alle getesteten Werkstoffe erwiesen sich als geeignet.

### Beispiel 5:

Um den Beginn der Bildung oxidischer Schlacken herauszufinden, wurde der Wasserdampfanteil im Wasserstoff auf 4 % erhöht. Eine Begasung mit einem Gemisch von Wasserstoff und 4 % Wasser in einer Anordnung wie in den Beispielen 1 - 4 führte binnen 2 Stunden zur Verstopfung der Bodenbohrungen in den Kaskaden durch ausfallendes SiO₂. Der Wasseranteil im Gas sollte daher 3,5 % nicht überschreiten.

### Beispiel 6:

In eine Begasungskaskade aus Quarz wurde über eine Schnecke kontinuierlich Silicium der Zusammensetzung wie in Tabelle 1 eingetragen und mit einem Gemisch von Wasserstoff und 2 % Wasser und einem Wasserstoff-zu-Silicium-Molverhältnis von 2,9 begast. Nach der Einstellung von stationären Begasungsbedingungen, die durch die Einstellung eines konstanten Begasungs- und Siliciumstromes über eine Stunde nach einem Vorlauf von einer Stunde, der verworfen wurde, definiert sind, wurden die Zudosierung und Begasung eingestellt und die Apparatur rasch abgekühlt. Darauf wurden Analysenproben aus dem mittleren und unteren Bereich der Anordnung entnommen und im Vergleich zum aufgefangenen Granulat analysiert. Die Ergebnisse zeigt die Tabelle 1:

**Tab.1**

| Angaben in ppmg | | | | | | | | | |
|---|---|---|---|---|---|---|---|---|---|
| Probe | Al | B | Ca | Cr | Cu | Fe | Mg | Ni | Ti |
| Ausgangsmaterial | 5 | 42 | 7 | 4 | 0,9 | 460 | 0,3 | 2 | 100 |
| Mitte | 10 | 14 | 25 | 2 | 0,7 | 170 | 0,8 | 1 | 40 |
| unten | 6 | 2 | 45 | 2 | 1 | 310 | 0,9 | 1 | 68 |
| Granulat | 9 | 0,9 | 2 | 4 | 2 | 400 | 0,3 | 1 | 91 |

Für die meisten metallischen Verunreinigungen wurde die Verunreinigungskonzentration konstant gehalten, leichte Abreicherungen konnten verzeichnet werden. Das Element Bor wurde über die Kaskaden jedoch wirksam bis unter ein ppmg abgereichert.

### Beispiel 7:

In Kaskadenreaktoren wie in den zuvor genannten Beispielen wurde Silicium bei gegenüber Beispiel 6 verdreifachtem Durchsatz mit Wasserstoff - 1 % Wasser in Wasserstoff-zu-Silicium-Molverhältnissen von 0,73 und 2,4 begast. Das höhere Molverhältnis bewirkte dabei auch eine erhöhte Borabreicherung bis auf die analytische Nachweisgrenze von Bor auf 0,1 ppmg (Tab. 2). Mit dem Gasdurchsatz läßt sich auf diese Weise die gewünschte Borendkonzentration unter stationären Begasungsbedingungen einstellen.

**Tab.2**

| Angaben in ppmg | | | | | | | | | |
|---|---|---|---|---|---|---|---|---|---|
| Probe | Al | B | Ca | Cr | Cu | Fe | Mg | Ni | Ti |
| Ausgangsmaterial | 360 | 2 | 7 | 3 | 2 | 76 | 2 | 2 | 22 |
| 0,73 H₂/Si | 280 | 0,3 | 2 | 2 | 0,9 | 73 | 0,8 | 1 | 23 |
| 2,4 H₂/Si | 350 | 0,1 | 2 | 2 | 2 | 45 | 0,5 | 2 | 11 |

### Beispiel 8:

Ein Silicium mit einem Anfangsgehalt von 42 ppmg Bor wurde in einer Kaskade mit 8 Böden mit einem Wasserstoff-2,5 %-Wasser-Gemisch und einem Wasserstoff-zu-Silicium-Molverhältnis von 3,4 kontinuierlich begast und als Granulat aufgefangen. Eine chemische Analyse ergab einen Borgehalt von 0,1 ppmg in dem so gereinigten Silicium, was der chemisch analytischen Nachweisgrenze entspricht.

## Patentansprüche

1. Kontinuierliches Verfahren zur Herstellung von gereinigtem Silicium durch Behandlung des zu reinigenden Siliciums mit reaktiven Gasen oder reaktiven Gasgemischen, dadurch gekennzeichnet, daß das zu reinigende Silicium durch einen mehrstufigen Reaktor aus siliciumresistentem Material geführt wird.

2. Verfahren gemäß Anspruch 1, dadurch gekennzeichnet, daß die Zahl der Stufen im Reaktor mindestens 3 beträgt.

3. Verfahren gemäß einem der Ansprüche 1 oder 2, dadurch gekennzeichnet, daß die Zahl der Stufen zwischen 7 und 15 beträgt.

4. Verfahren gemäß einem oder mehreren der Ansprüche 1 bis 3, dadurch gekennzeichnet, daß als reaktives Gasgemisch eine Mischung aus Wasserstoff und Wasserdampf eingesetzt wird.

5. Verfahren gemäß Anspruch 4, dadurch gekennzeichnet, daß der Wasseranteil im Wasserstoff zwischen 0,2 und 3,5 Vol.-% beträgt.

6. Verfahren gemäß einem der Ansprüche 4 oder 5, dadurch gekennzeichnet, daß bei der Begasung ein Molverhältnis von Wasserstoff zu Silicium von mindestens 0,5, bevorzugt mindestens 1, eingestellt wird, wobei das Molverhältnis von Wasserstoff zu Silicium durch die Verweilzeit des Siliciums im Reaktors und den Volumenstrom des Gasgemisches eingestellt wird.

7. Verfahren gemäß einem oder mehreren der Ansprüche 1 bis 6, dadurch gekennzeichnet, daß die Begasung des Siliciums im Gegenstrom erfolgt.

8. Vorrichtung zur Durchführung des Verfahrens gemäß einem oder mehreren der Ansprüche 1 bis 6, dadurch gekennzeichnet, daß es sich bei dem Reaktor um ein senkrecht stehendes Rohr mit gas- und siliciumdurchlässigen Böden in der Art einer Begasungssäule handelt.

9. Vorrichtung gemäß Anspruch 8, dadurch gekennzeichnet, daß die Konstruktionsstoffe des Reaktors Quarz, Graphit, SiC, Si₃N₄ und/oder Kombinationen dieser Materialien sind.
